# FASCICULE DE BREVET EUROPEEN

(11) **EP 2 755 120 B1**
(45) Date de publication et mention de la délivrance du brevet: **04.03.2015**
(21) Numéro de dépôt: 14151011.5
(22) Date de dépôt: 13.01.2014
(51) Int. Cl.: G06F 3/0481, G06F 1/16, G06F 3/0346

(54) **Appareil électronique portatif avec détermination automatique de l'orientation "portrait" ou "paysage"**
Tragbares elektronisches Gerät mit automatischer Bestimmung der Ausrichtung auf Porträt oder Landschaft
Portable electronic apparatus with automatic determination of portrait or landscape orientation

(30) Priorité: 11.01.2013 FR 1350236
(43) Date de publication de la demande: 16.07.2014
(73) Titulaire: Freebox SAS, 75016 Paris (FR)
(72) Inventeur: Pouillon, Nicolas, 75013 Paris (FR)
(74) Mandataire: Dupuis-Latour, Dominique

(56) Documents cités:
- EP-A1- 1 892 611
- EP-A1- 2 450 775
- US-A1- 2008 048 993

## Description

L'invention concerne les appareils mobiles conçus pour être tenus à la main selon deux positions dites "portrait" et "paysage", correspondant à deux interfaces d'utilisation différentes.

Lorsque l'appareil est tenu d'une seule main, sa forme généralement rectangulaire fait en sorte qu'il se trouve naturellement en position "portrait". Mais cette position n'est pas satisfaisante pour certaines applications, qui peuvent tirer parti d'une orientation plus large que haute de l'appareil, dite "paysage", par exemple pour l'utilisation comme manette de jeu, ou pour la saisie d'un texte sur un clavier au moyen des deux pouces.

Le but de l'invention est de proposer un système de détection automatique de l'orientation "portrait" ou "paysage" d'un tel appareil, de manière à sélectionner automatiquement l'interface appropriée en fonction de cette orientation. L'interface en question peut être une interface de présentation de données, notamment sur un écran où selon le cas la présentation en mode "portrait" ou "paysage" est plus avantageuse, mais aussi une interface d'entrée, pour un appareil utilisable comme télécommande, manette de jeu, clavier portatif de saisie de caractères, etc.

L'invention est en particulier avantageusement applicable à un appareil déporté de type télécommande ou analogue, associé à un équipement de type "téléviseur connecté" (ou encore "téléviseur Internet" ou "IPTV") ou à un équipement de type *set-top box* ou boitier décodeur de fournisseur d'accès Internet, associé à un téléviseur permettant d'afficher diverses informations. Un exemple d'équipement de ce type est le boitier distribué par l'opérateur *Free,* Paris, France, sous la dénomination *Freebox Player* ou *Freebox HD* ; ce boitier intègre décodeur, serveur domestique, etc. et il est piloté par une télécommande multifonction à disposition de l'utilisateur assurant, outre les fonctions classiques de sélection d'un programme, contrôle du son et de l'image, etc. des fonctions supplémentaires telles que la saisie d'un texte sur un clavier.

La technique généralement utilisée pour détecter automatiquement l'orientation d'un appareil portatif tenu à la main, notamment avec les appareils de type *smartphone,* consiste à analyser les signaux délivrés par un ou plusieurs accéléromètres intégrés à l'appareil, afin de détecter la direction de la verticale dans un repère absolu (direction de l'accélération de la gravité terrestre) et en déduire l'orientation "portrait" ou "paysage" en fonction de cette direction par rapport aux axes principaux de l'appareil (direction de la longueur et de la largeur du boitier rectangulaire).

Cette technique présuppose que l'utilisateur est debout face à son appareil et que celui-ci se présente verticalement, ou au moins légèrement incliné.

Même si cela est vrai dans la plupart des usages, cette hypothèse peut n'être pas vérifiée dans divers cas, qui peuvent s'avérer frustrants pour l'utilisateur.

Par exemple, lorsque l'appareil est une télécommande d'une *box* ou d'un téléviseur connecté et qu'il est manipulé par l'utilisateur alors que celui-ci est en position allongée, l'orientation du repère terrestre ne concorde plus avec celui de l'utilisateur, de sorte que l'appareil risque de basculer en mode "paysage" alors qu'il devrait être en mode "portrait", ou l'inverse, ce qui conduit généralement l'utilisateur à verrouiller l'orientation obtenue et fait donc perdre une grande part de l'intérêt de la détection automatique. Une situation comparable se présente lorsque l'appareil est tenu à la main presque à plat, notamment pour la saisie d'un texte sur un clavier avec les deux pouces, ou bien pour utilisation comme manette de jeu : la direction de la gravité étant très proche de la normale à la surface de l'appareil, l'incertitude sur l'orientation est élevée et ne permet pas une détection automatique satisfaisante de l'orientation.

Le US 2008/048993 A1 propose d'entourer l'afficheur d'un rebord périphérique pourvu de capteurs tactiles détectant les régions où se trouvent les mains de l'utilisateur. Le dispositif analyse les informations recueillies pour déterminer la manière dont il est tenu entre les mains de l'utilisateur, et contrôle en conséquence l'orientation, portrait ou paysage, de l'affichage. Une technique comparable est décrite par le EP 1 892 611 A1.

Cette manière de procéder n'est toutefois bien adaptée qu'aux dispositifs relativement grands, par exemple de type "tablette", tenus à deux mains.

Le EP 2 450 775 A1 propose une autre technique encore, consistant à utiliser un capteur d'empreinte digitale. L'utilisateur pose l'extrémité de son doigt sur ce capteur et, si son empreinte est reconnue, le dispositif détermine automatiquement l'orientation de l'affichage en fonction de l'orientation angulaire de l'empreinte détectée.

Le but de l'invention est de pallier les difficultés ci-dessus, en proposant une technique très fiable de discrimination automatique "portrait/paysage" d'un appareil tenu à la main, qui détecte l'orientation relative de l'appareil dans un repère lié à l'utilisateur, et qui puisse être mis en oeuvre avec tous types d'appareils, même si ces derniers sont susceptibles d'être tenus en main de façons très différentes.

L'invention sera décrite plus particulièrement dans le cas d'un appareil constitué d'un périphérique ou boitier de télécommande à double fonction changeant d'usage selon son orientation, le mode "portrait" permettant une utilisation en télécommande classique et le mode "paysage" étant plus adapté à un clavier pour une saisie d'un texte à deux pouces.

Cet exemple n'est bien entendu pas limitatif, l'invention pouvant s'appliquer à tout appareil électronique portatif apte à être tenu à une ou deux mains, que ce périphérique soit pourvu ou non d'une interface de présentation de données (écran orientable) ou qu'il s'agisse d'un dispositif uniquement conçu comme périphérique d'entrée pour le contrôle d'un équipement auquel il est associé et l'entrée de données notamment par saisie sur un clavier.

Le point de départ de l'invention est la constatation du fait que, suivant l'orientation de l'appareil face à l'utilisateur, les doigts et les mains de celui-ci ne se placent pas de la même manière sur l'appareil, de sorte qu'une analyse des zones de contact des mains sur l'appareil pourra permettre d'extrapoler l'orientation de cet appareil. Les zones de contact les plus utiles à cet effet sont la périphérie de l'appareil, ainsi que son dos, et si l'on dispose de capteurs suffisamment précis il sera possible de détecter non seulement la position de l'intérieur des mains (paumes) sur les côtés de l'appareil, mais aussi la position des doigts sur le dos de l'appareil. L'idée de base de l'invention consiste à recouper ces deux sources d'information, à savoir :
- la position des doigts (d'une main ou des deux mains, selon la façon dont est tenu l'appareil) en appui sur le dos de l'appareil en un ou deux groupes de points, information permettant de déduire une (ou deux) droite(s) représentative(s) du placement de ces points de contact des doigts et orientée(s) à peu près perpendiculairement à l'orientation des mains ; et
- la position des contacts de la main (ou des mains) de l'utilisateur avec la périphérie de l'appareil, ces contacts correspondant au creux de la main de l'utilisateur (paume), ou bien à l'intérieur des phalanges des doigts.

Ces deux informations, combinées entre elles, permettront de déduire l'orientation de l'appareil vis-à-vis des mains de l'utilisateur, donc vis-à-vis de l'utilisateur lui-même.

Plus précisément, l'invention propose un ensemble du type général divulgué par le US 2008/048993 A1 précité, comprenant les éléments énoncés dans le préambule de la revendication 1.

La présente invention est remarquable en ce qu'elle comprend, pour atteindre les buts indiqués plus haut, les éléments énoncés dans la partie caractérisante de la revendication 1.

Les sous-revendications visent diverses formes de mise en oeuvre particulières, avantageuses.

On va maintenant décrire un exemple de réalisation de l'invention, en référence aux dessins annexés où les mêmes références numériques désignent d'une figure à l'autre des éléments identiques ou fonctionnellement semblables.
La Figure 1 est une vue de profil d'un appareil électronique portatif, montrant les surfaces pertinentes pour la détection de la position des mains.
La Figure 2 montre l'appareil électronique tenu d'une main, présenté dans une orientation "portrait".
La Figure 3 illustre l'appareil électronique tenu à deux mains, présenté dans une orientation "paysage".
La Figure 4 illustre le dos de l'appareil tenu dans la configuration de la Figure 2, montrant la manière d'analyser la position des doigts et de la main pour en déduire l'orientation de l'appareil.
La Figure 5 est un schéma par blocs fonctionnels montrant les diverses fonctions mises en oeuvre pour la détection automatique de l'orientation "portrait" ou "paysage" de l'appareil.

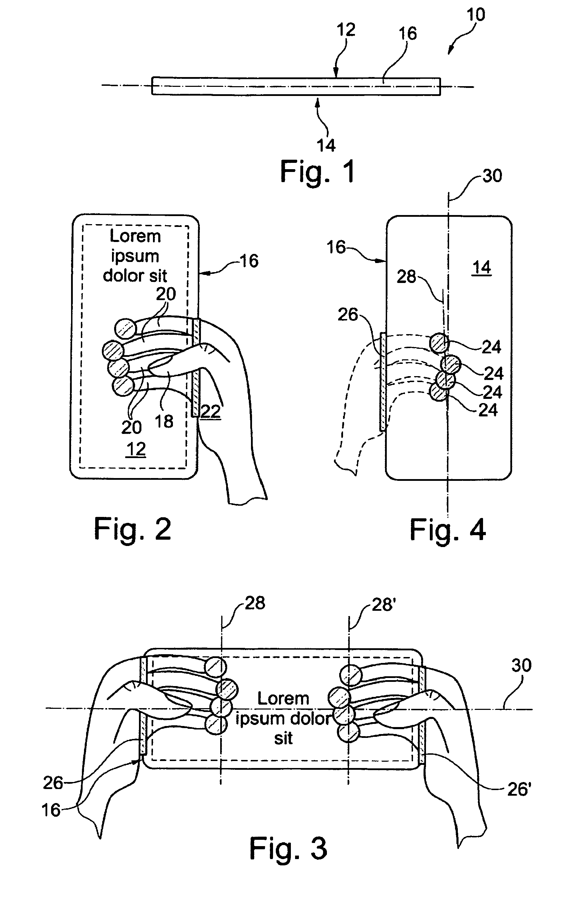

La Figure 1 illustre de façon schématique, de profil, un appareil électronique portatif 10 comportant une face frontale 12 tournée vers l'utilisateur, une face de dos 14 opposée à la face frontale et un rebord périphérique 16.

Comme illustré Figure 2, la forme de cet appareil est approximativement rectangulaire, plus longue que large, le rebord périphérique 16 comprenant quatre côtés correspondant aux quatre côtés de la forme rectangulaire.

La face frontale 12 est la face servant d'interface avec l'utilisateur, qui peut comprendre des moyens d'interfaçage d'entrée (boutons de commande, clavier de saisie de texte, etc., ces boutons et ce clavier pouvant être des commandes physiques ou, de préférence, des commandes tactiles sur une face lisse pourvue de moyens de détection de contact) et/ou de sortie (notamment un écran d'affichage).

Cette interface d'entrée et/ou de sortie est conçue pour être utilisée de deux façons différentes, soit en orientation "portrait" comme illustré Figure 2 où la plus grande dimension de l'appareil est verticale par rapport à la vue de l'utilisateur, ou "paysage" comme illustré Figure 3, où cette plus grande direction est horizontale par rapport au regard de l'utilisateur. Dans le cas d'une interface de sortie, il peut s'agir d'un pivotement d'une image affichée (comme l'exemple du texte présenté sur les Figures 2 et 3) pour que celle-ci soit présentée dans la bonne direction pour l'utilisateur. Dans le cas d'une interface d'entrée, il peut s'agir de fonctions différentes, par exemple de fonction de télécommande d'un appareil distant en mode "portrait" et de saisie d'un texte ou de contrôle comme manette de jeu dans l'orientation "paysage".

De façon caractéristique, la face de dos 14 est une surface tactile, de même que la surface de la paroi de rebord 16.

Ces surfaces tactiles sont couplées à des moyens de détection permettant de produire des informations de position des zones de contact des doigts ou du creux de la main sur ces surfaces tactiles, donc sur le contact des doigts et de la main avec respectivement la face de dos 14 et la paroi de rebord périphérique 16.

Lorsque l'appareil est en position "portrait" (Figure 2), il est généralement tenu à une seule main, entre le pouce 18 et les autres doigts 20, la paume 22 de la main pouvant venir en contact avec le rebord 16.

Comme illustré sur la Figure 4, qui représente l'appareil de la Figure 2 vu de dos, dans cette orientation "portrait" les doigts se posent naturellement sur le dos de l'appareil, et du fait de la forme de la main les bouts des doigts 24 d'une même main sont approximativement alignés suivant une direction 28 voisine de celle de la plus grande dimension 30 (axe majeur) du boitier, ce qui permet de supposer que l'appareil est tenu en mode "portrait". Cette détermination, couplée à la détection du contact, schématisé en 26, de la paume ou de la région proximale des doigts, sur le rebord 16 de l'appareil, il sera possible de déterminer avec quasi certitude où se trouve la main de l'utilisateur, et dans quelle orientation.

La direction de la droite 28 peut être déterminée par une régression linéaire classique appliquée au "nuage de points" des extrémités 24 des doigts au contact de la surface tactile 14. Concrètement, seule la pente de cette droite de régression 28 est utile pour déterminer l'orientation de la main par rapport à l'appareil, et donc l'orientation relative de ce même appareil par rapport à l'utilisateur.

Lorsque l'appareil est tenu à deux mains en position "paysage", comme illustré Figure 3, la surface tactile de la face de dos 14 détecte et discrimine deux droites de régression linéaire 28, 28', dont l'orientation est approximativement perpendiculaire à la direction principale 30 du boitier, laissant supposer une tenue de l'appareil en mode "paysage".

Le recoupement de cette information avec la détection des contacts sur le rebord périphérique, qui révèle des zones de contact 26, 26' au nombre de deux, sur les petits côtés du boitier rectangulaire, permet de confirmer que l'appareil est bien tenu en mode "paysage". En outre, l'expérience montre que dans cette position les utilisateurs placent leurs mains "en bas" de l'appareil, avec effet de le soutenir sur sa tranche faisant face au sol. Cette information, ajoutée aux précédentes, permet de déterminer avec certitude l'orientation de l'appareil.

Dans certains cas, il se peut que seulement certains doigts de l'utilisateur soient appuyés sur le dos de l'appareil, mais ceci n'aura qu'un impact minimal dans la mesure où la direction de la droite de régression linéaire 28, ou des deux droites 28 et 28', peut être déduite dès que l'on dispose d'au moins deux points de contact. Du fait qu'il est peu pratique de tenir un appareil mobile seulement entre le pouce et l'index, il est très probable qu'au moins deux doigts touchent la face de dos 14 et que leur contact puisse donc être détecté par le mécanisme selon l'invention.

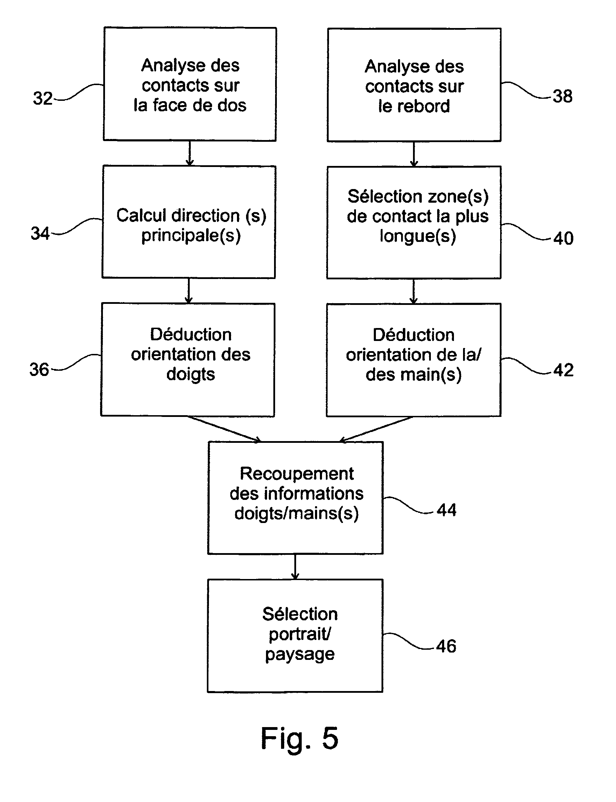

La Figure 5 est un schéma par blocs fonctionnels illustrant les diverses fonctions mises en oeuvre pour la détection automatique de l'orientation "portrait" ou "paysage" de l'appareil.

Comme on l'a indiqué plus haut, il s'agit d'analyser deux groupes distincts de zones de contact entre la main de l'utilisateur et l'appareil, à savoir (i) le contact des doigts sur le dos de l'appareil (blocs 32, 34 et 36) et (ii) le contact entre l'intérieur de la main, paume ou partie proximale des doigts, et le rebord périphérique de l'appareil (blocs 38, 40 et 42).

Dans le premier cas, après avoir détecté et analysé les contacts sur la face de dos 14 (bloc 32), le dispositif calcule la (les) direction(s) principale(s) 28 (ou 28, 28'), par exemple par un calcul de régression linéaire (bloc 34) puis en déduit l'orientation des extrémités des doigts, c'est-à-dire de la (des) droite(s) de régression linéaire 28 (ou 28 28') par rapport à l'axe principal 30 de l'appareil (bloc 36).

Parallèlement, le dispositif détecte les positions des zones de contact 26 ou 26, 26' sur le rebord périphérique 16 (bloc 38), notamment celui ou ceux des côtés de la forme rectangulaire du boitier en contact avec une zone de la main de l'utilisateur sur la surface tactile du rebord 16, et/ou le côté de la forme rectangulaire du boitier présentant la plus grande longueur de contact de la zone de la main de l'utilisateur avec la surface tactile de ce rebord. Le dispositif sélectionne la zone de contact la plus longue (bloc 40) pour en déduire l'orientation de la main ou des deux mains par rapport à l'appareil (bloc 42).

Les informations d'orientation produites séparément par les blocs 36 et 42 sont ensuite recoupées (bloc 44) pour une détermination finale, automatique, de l'orientation "portrait" ou "paysage" de l'appareil (blocs 44, 46). Ce recoupement peut par exemple résulter de l'application d'une table de vérité répertoriant l'ensemble des sorties possibles des blocs 36 et 42.

En cas d'indétermination ou d'incohérence, le dispositif peut éventuellement donner la priorité à l'une des informations sur l'autre, par exemple la priorité à l'orientation des mains telle que déterminée par le bloc 42 sur celle des doigts déterminée par le bloc 36, ou *vice versa* selon la nature particulière de l'interface considérée. Ce choix dépend également des dimensions de l'appareil : en effet, suivant le facteur de forme de l'appareil, il est plus ou moins aisé de le tenir de manière non conventionnelle, et cet aspect pourra être pris en compte dans la décision d'orientation à prendre en cas d'indétermination ou d'incohérence.

Également en cas d'indétermination ou de perte de contact, il est possible d'inhiber la commutation automatique de l'orientation "portrait/paysage", notamment si l'on ne détecte pas de contact d'au moins deux doigts de l'utilisateur sur la face de dos 14 et/ou au moins une zone de contact 26 sur le rebord périphérique 16. En variante, au lieu d'inhiber les moyens de commutation ou d'orientation dans une telle situation, il est possible de forcer une sélection par défaut de l'orientation "portrait" ou "paysage", ici encore selon la nature particulière de l'interface considérée.

Enfin, on notera que le recoupement des informations d'orientation des doigts et de la main au bloc 44 peut être éventuellement combiné à une indication d'orientation fournie par un accéléromètre intégré à l'appareil, donnant une information sur l'inclinaison de ce dernier par rapport à la verticale d'un repère terrestre absolu.

## Revendications

1. Un appareil électronique portatif (10), comportant un boitier orientable, notamment de forme rectangulaire, apte à être tenu en main par un utilisateur dans l'une ou l'autre de deux orientations "portrait" et "paysage",
le boitier comprenant une face frontale (12) tournée vers l'utilisateur, une face de dos (14) opposée à la face frontale, et une paroi de rebord périphérique (16) avec quatre côtés correspondant aux quatre côtés de la forme rectangulaire,
l'appareil comprenant des moyens de détermination automatique de l'orientation "portrait" ou "paysage" du boitier, et des moyens de commutation sélective de fonctions de l'appareil selon l'orientation du boitier,
les moyens de détermination automatique de l'orientation "portrait" ou "paysage" du boitier comprenant :
- une surface tactile latérale, s'étendant sur la paroi de rebord périphérique (16), et des premiers moyens de détection (38-42), aptes à détecter le contact (26) d'au moins une zone de la main (22) de l'utilisateur sur la surface tactile latérale et à produire en réponse des informations de position de main correspondant à la position de la zone de la main, ou aux positions respectives des zones de la main, sur la surface tactile latérale ; et
- des moyens discriminateurs (44-46), aptes à déterminer l'orientation "portrait" ou "paysage" du boitier à partir des informations de position de main,
**caractérisé en ce que** :
- les moyens de détermination automatique de l'orientation "portrait" ou "paysage" comprennent en outre une surface tactile de dos, s'étendant sur la face de dos (14) du boitier, et des seconds moyens de détection (32-36), aptes à détecter le contact (24) d'au moins deux doigts (20) de l'utilisateur sur la surface tactile de dos, et à produire en réponse des informations de position de doigt correspondant aux positions respectives des différents doigts sur la surface tactile de dos ;
- les seconds moyens de détection (32-36) sont aptes à calculer une direction moyenne d'alignement (28) des positions (24) des différents doigts sur la surface tactile de dos ; et
- les moyens discriminateurs (44-46) sont aptes à déterminer l'orientation "portrait" ou "paysage" du boitier à partir des informations combinées de position de doigt et de position de main.

2. L'appareil de la revendication 1, dans lequel la direction moyenne d'alignement (28) est la direction d'une droite de régression linéaire des positions (24) des différents doigts sur la surface tactile de dos.

3. L'appareil de la revendication 1, dans lequel les seconds moyens de détection (32-36) sont aptes à calculer un angle formé entre la direction moyenne d'alignement (28) et la direction d'un axe majeur (30) de la forme notamment rectangulaire du boitier.

4. L'appareil de la revendication 1, dans lequel les premiers moyens de détection (38-42) sont aptes à déterminer celui ou ceux des côtés de la forme notamment rectangulaire du boitier en contact avec une zone de la main de l'utilisateur sur la surface tactile latérale.

5. L'appareil de la revendication 4, dans lequel les premiers moyens de détection (38-42) sont aptes à déterminer le côté de la forme notamment rectangulaire du boitier présentant la plus grande longueur de contact de la zone de la main de l'utilisateur avec la surface tactile latérale.

6. L'appareil de la revendication 1, comprenant en outre des moyens pour inhiber les moyens de commutation sélective de fonctions de l'appareil selon l'orientation du boitier, en l'absence de détection du contact d'au moins deux doigts de l'utilisateur sur la surface tactile de dos par les seconds moyens de détection, et/ou de détection du contact d'au moins une zone de la main de l'utilisateur sur la surface tactile latérale par les premiers moyens de détection.

7. L'appareil de la revendication 1, comprenant en outre des moyens pour forcer sur une sélection par défaut les moyens de commutation sélective de fonctions de l'appareil selon l'orientation du boitier, en l'absence de détection du contact d'au moins deux doigts de l'utilisateur sur la surface tactile de dos par les seconds moyens de détection, et/ou de détection du contact d'au moins une zone de la main de l'utilisateur sur la surface tactile latérale par les premiers moyens de détection.

## Patentansprüche

1. Tragbares elektronisches Gerät (10), das ein drehbares Gehäuse, insbesondere mit rechteckiger Form, aufweist, das geeignet ist, um durch einen Benutzer in der einen oder der anderen von zwei Ausrichtungen "Hochformat" und "Querformat" gehalten zu werden,
wobei das Gehäuse eine dem Benutzer zugewandte Vorderseite (12), eine der Vorderseite entgegengesetzte Rückseite (14) und eine Umfangsrandwand (16) mit vier Seiten aufweist, die den vier Seiten der rechteckigen Form entsprechen,
wobei das Gerät Mittel zur automatischen Bestimmung der Ausrichtung "Hochformat" oder "Querformat" des Gehäuses und Mittel zum selektiven Umschalten von Funktionen des Geräts gemäß der Ausrichtung des Gehäuses aufweist,
wobei die Mittel zur automatischen Bestimmung der Ausrichtung "Hochformat" oder "Querformat" des Gehäuses Folgendes aufweisen:
- eine berührungsempfindliche Seitenfläche, die sich auf der Umfangsrandwand (16) erstreckt, und erste Detektionsmittel (38 bis 42), die geeignet sind, die Berührung (26) von mindestens einer Zone der Hand (22) des Benutzers auf der berührungsempfindlichen Seitenfläche zu ermitteln und als Reaktion Handpositionsinformationen zu erzeugen, die der Position der Zone der Hand oder den entsprechenden Positionen der Zonen der Hand auf der berührungsempfindlichen Seitenfläche entsprechen; und
- Unterscheidungsmittel (44 bis 46), die geeignet sind, um die Ausrichtung "Hochformat" oder "Querformat" des Gehäuses ausgehend von den Handpositionsinformationen zu bestimmen,
**dadurch gekennzeichnet, dass**:
- die Mittel zur automatischen Bestimmung der Ausrichtung "Hochformat" oder "Querformat" ferner eine berührungsempfindliche Rückseitenfläche, die sich auf der Rückseite (14) des Gehäuses erstreckt, und zweite Detektionsmittel (32 bis 36) aufweisen, die geeignet sind, die Berührung (24) von mindestens zwei Fingern (20) des Benutzers auf der berührungsempfindlichen Rückseitenfläche zu ermitteln und als Reaktion Fingerpositionsinformationen zu erzeugen, die den entsprechenden Positionen der verschiedenen Finger auf der berührungsempfindlichen Rückseitenfläche entsprechen;
- die zweiten Detektionsmittel (32 bis 36) geeignet sind, eine mittlere Ausrichtungsrichtung (28) der Positionen (24) der unterschiedlichen Finger auf der berührungsempfindlichen Rückseitenfläche zu berechnen; und
- die Unterscheidungsmittel (44 bis 46) geeignet sind, die Ausrichtung "Hochformat" oder "Querformat" des Gehäuses ausgehend von kombinierten Fingerpositions- und Handpositionsinformationen zu bestimmen.

2. Gerät nach Anspruch 1, wobei die mittlere Ausrichtungsrichtung (28) die Richtung einer linearen Regressionsgeraden der Positionen (24) der verschiedenen Finger auf der berührungsempfindlichen Rückseitenfläche ist.

3. Gerät nach Anspruch 1, wobei die zweiten Detektionsmittel (32 bis 36) geeignet sind, einen Winkel zu berechnen, der zwischen der mittleren Ausrichtungsrichtung (28) und der Richtung einer Hauptachse (30) der insbesondere rechteckigen Form des Gehäuses gebildet ist.

4. Gerät nach Anspruch 1, wobei die ersten Detektionsmittel (38 bis 42) geeignet sind, diejenige oder diejenigen der Seiten der insbesondere rechteckigen Form des Gehäuses, die mit einer Zone der Hand des Benutzers in Berührung steht/stehen, auf der berührungsempfindlichen Seitenfläche zu bestimmen.

5. Gerät nach Anspruch 4, wobei die ersten Detektionsmittel (38 bis 42) geeignet sind, die Seite der insbesondere rechteckigen Form des Gehäuses zu bestimmen, die die größte Berührungslänge der Zone der Hand des Benutzers mit der berührungsempfindlichen Seitenfläche aufweist.

6. Gerät nach Anspruch 1, das ferner Mittel aufweist, um die Mittel zum selektiven Umschalten von Funktionen des Geräts gemäß der Ausrichtung des Gehäuses bei Nichtvorhandensein von Ermittlung der Berührung von mindestens zwei Fingern des Benutzers auf der berührungsempfindlichen Rückseitenfläche durch die zweiten Detektionsmittel und/oder von Ermittlung der Berührung von mindestens einer Zone der Hand des Benutzers auf der berührungsempfindlichen Seitenfläche durch die ersten Detektionsmittel zu sperren.

7. Gerät nach Anspruch 1, das ferner Mittel zum Erzwingen der Mittel zum selektiven Umschalten der Funktionen des Geräts auf eine Standardauswahl gemäß der Ausrichtung des Gehäuses bei Nichtvorhandensein von Ermittlung der Berührung von mindestens zwei Fingern des Benutzers auf der berührungsempfindlichen Rückenseitenfläche durch die zweiten Detektionsmittel und/oder von Ermittlung der Berührung von mindestens einer Zone der Hand des Benutzers auf der berührungsempfindlichen Seitenfläche durch die ersten Detektionsmittel aufweist.

## Claims

1. A portable electronic device (10), comprising an orientable case, in particular of rectangular shape, adapted to be held in hand by a user in either one of two "portrait" and "landscape" orientations,
the case comprising a front face (12) directed towards the user, a back face (14) opposed to the front face, and a peripheral edge wall (16) with four sides corresponding to the four sides of the rectangular shape,
the device comprising means for automatically determining the "portrait" or "landscape" orientation of the case, and means for selectively switching functions of the device according to the orientation of the case,
the means for automatically determining the "portrait" or "landscape" orientation of the case comprising :
- a lateral touch-sensitive surface, extending over the peripheral edge wall (16), and first detection means (38-42), adapted to detect the contact (26) of at least one area of the hand (22) of the user on the lateral touch-sensitive surface and to produce as an answer hand position information corresponding to the position of the area of the hand, or to the respective positions of the areas of the hand, on the lateral touch-sensitive surface; and
- discriminating means (44, 46), adapted to determine the "portrait" or "landscape" orientation of the case based on the hand position information,
**characterized in that**:
- the means for automatically determining the "portrait" or "landscape" orientation further comprise a back touch-sensitive surface, extending over the back face (14) of the case, and second detection means (32, 36), adapted to detect the contact (24) of at least two fingers (20) of the user on the back touch-sensitive surface, and to produce as an answer finger position information corresponding to the respective positions of the different fingers on the back touch-sensitive surface;
- the second detection means (32-36) are adapted to calculate a mean distance of alignment (28) of the positions (24) of the different fingers on the back touch-sensitive surface; and
- the discriminating means (44-46) are adapted to determine the "portrait" or "landscape" orientation of the case based on combined finger position and hand position information.

2. The device of claim 1, wherein the mean distance of alignment (28) is the direction of a straight line of linear regression of the positions (24) of the different fingers on the back touch-sensitive surface.

3. The device of claim 1, wherein the second detection means (32-36) are adapted to calculate an angle formed between the mean direction of alignment (28) and the direction of a major axis (30) of the shape, in particular a rectangular shape, of the case.

4. The device of claim 1, wherein the first detection means (38-42) are adapted to determine that or those of the sides of the shape, in particular a rectangular shape, of the case that are in contact with an area of the user's hand on the lateral touch-sensitive surface.

5. The device of claim 4, wherein the first detection means (38-42) are adapted to determine the side of the shape, in particular a rectangular shape, of the case that has the greatest length of contact of the area of the user's hand with the lateral touch-sensitive surface.

6. The device of claim 1, further comprising means for inhibiting the means for selectively switching functions of the device according to the orientation of the case, in the absence of detection of contact of at least two fingers of the user on the back touch-sensitive surface by the second detection means, and/or of detection of contact of at least one area of the user's hand on the lateral touch-sensitive surface by the first detection means.

7. The device of claim 1, further comprising means for forcing to a default selection the means for selectively switching functions of the device according to the orientation of the case, in the absence of detection of contact of at least two fingers of the user on the back touch-sensitive surface by the second detection means, and/or of detection of contact of at least one area of the user's hand on the lateral touch-sensitive surface by the first detection means.
